# FASCICULE DE BREVET EUROPEEN

(11) **EP 4 608 707 B1**
(45) Date de publication et mention de la délivrance du brevet: **08.07.2026**
(21) Numéro de dépôt: 23833177.1
(22) Date de dépôt: 05.12.2023
(51) Int. Cl.: B62J 43/13, B62K 19/02, B62K 19/16, B62J 43/28, B29C 45/00, B62M 6/90, B23P 15/00, B21D 53/86, B62K 19/34, B62K 19/36

(54) **PROCÉDÉ DE FABRICATION PAR MOULAGE D'UN CADRE DE VÉLO MONOBLOC**
VERFAHREN ZUR HERSTELLUNG EINES EINTEILIGEN FAHRRADRAHMENS DURCH FORMEN
METHOD FOR MANUFACTURING A SINGLE-PIECE BICYCLE FRAME BY MOLDING

(30) Priorité: 23.02.2023 FR 2301658
(43) Date de publication de la demande: 03.09.2025
(73) Titulaire: Groupe SAB - Financiere d'Azolette, 42670 Belmont-de-la-Loire (FR)
(72) Inventeur: MARTINOT, Benoît, 42670 BELMONT-DE-LA-LOIRE (FR); GROSSELIN, Jean-François, 42670 BELMONT-DE-LA-LOIRE (FR)
(74) Mandataire: Ipsilon
(86) Numéro de dépôt international: PCT/FR2023/051930
(87) Numéro de publication internationale: WO 2024/175837

(56) Documents cités:
- CN-A- 112 590 992
- GB-A- 2 487 665
- JP-A- 2014 162 450
- TW-B- I 588 056

## Description

### Domaine technique

L'invention se rapporte au domaine technique de la fabrication de cadre de vélo en aluminium.

### Art antérieur

Il est connu diverses méthodes de fabrication de cadre de vélos en aluminium.

La méthode la plus couramment répandue consiste à assembler, par soudage, différents tubes. Cette méthode présente l'avantage de ne pas nécessiter d'outillage couteux, mais vu la forme complexe des cadres de vélo, elle ne peut pas être effectuée uniquement avec des tubes et nécessite l'intégration de pièce de fonderie, d'usinage ou de forge :
- Le coût de main d'œuvre est donc important. Pour diminuer le coût de main d'œuvre, il est possible de délocaliser la fabrication dans des pays à faible coûts de production, ce qui implique des temps de transports importants des cadres une fois qu'ils sont fabriqués, et une plus faible souplesse logistique.
- La soudure entre pièce de fonderie ou forge et des tubes extrudés présentant des difficultés, sa répétabilité n'est pas assurée et des défauts de fabrication peuvent survenir.
- La chauffe générée par la soudure induit sur les pièces une zone affectée thermiquement, au sein de laquelle les caractéristiques sont altérées. Il convient généralement de procéder, après la soudure, à un traitement de normalisation de l'alliage des pièces, ce qui augmente le coût de fabrication.

Par ailleurs, les vélos sont de plus en plus souvent équipés de moteurs électriques, afin de motoriser le déplacement, ou d'assister le pédalage.

Ces vélos embarquent un moteur et une batterie, ils sont donc plus lourds que des vélos classiques. Du fait de leur motorisation, ils subissent des sollicitations dynamiques plus importantes. Les cadres de ces vélos sont donc soumis à des contraintes mécaniques plus importantes, et doivent être plus solides que des cadres de vélos sans moteurs.

Les documents CN112046665, JP2000280962, GB842522, DE3804342, CN112935217, CN114309487 et WO86/05458 présentent chacun des méthodes de fabrication de cadres qui ne sont pas optimisées :
- soit du point de vue de la durée de fabrication, ou de sa complexité ;
- soit du point de vue de la performance de la méthode, ou de la qualité réalisable ;
- soit du point de vue de leur incompatibilité avec un vélo motorisé.

Le document CN112590992A montre le préambule de la revendication 5.

### Exposé de l'invention

L'un des buts de l'invention est de pallier les inconvénients de l'art antérieur, notamment en proposant un cadre de vélo motorisé, et dont le coût de fabrication est réduit.

L'invention concerne également un procédé de fabrication d'un tel cadre de vélo.

L'invention concerne enfin une installation de fabrication de tels cadres.

À cet effet, il a été mis au point un procédé de fabrication d'un cadre de vélo en aluminium, présentant :
- un tube de direction ;
- un tube de selle ;
- un tube oblique ;
- une base, et de préférence deux bases ;
- un boitier de pédalier, de préférence du type pour un moteur pédalier ; et
- un support de batterie, de préférence au sein du tube oblique, le procédé étant remarquable en ce qu'il comprend une unique étape de moulage mettant en oeuvre deux empreintes en vis-à-vis et enserrant un unique noyau monobloc, de manière à former un cadre monobloc dans lequel les tubes définissent des cavités reliées entre elles.

Selon l'invention, le procédé met en œuvre uniquement deux empreintes en vis-à-vis et enserrant un unique noyau monobloc. Plus particulièrement, l'étape de moulage ne fait intervenir que deux empreintes en vis-à-vis et enserrant un noyau monobloc, c'est-à-dire que le moule utilisé ne comprend pas de broche escamotable, ni de tiroir de démoulage, qui sont parfois utilisés en fonderie pour obtenir des formes creuses ou en contre-dépouille.

De cette manière, les temps de production sont optimisés car les opérations de pose de noyaux dans les empreintes étant manuelles, eu égard à la fragilité des noyaux en sable, ne manipuler qu'un seul noyau est un gain de temps.

De plus, il n'est nécessaire de fabriquer qu'une seule boîte à noyaux pour fabriquer les noyaux, et l'augmentation du volume d'un noyau unique entraîne un surcoût qui est inférieur au coût complet de deux boîtes à noyaux, même si ces noyaux sont de tailles plus modérées.

Ensuite, l'assemblage de noyaux, via un système de formes complémentaires destinées à s'assembler entre elles ou via une colle, est trop imprécis pour respecter les exigences de géométrie d'un cadre. De plus, le risque de détérioration de l'assemblage lors de la coulée de l'alliage, et donc de l'échec du moulage, est présent.

Selon une forme de réalisation particulière, le procédé comprend des opérations d'usinage de surfaces fonctionnelles du cadre moulé, réalisées au sein d'une unique machine d'usinage, tel qu'un centre d'usinage à 5 axes. De cette manière, une seule étape d'usinage est suffisante, sans démontage et reprise du cadre :
- non seulement la durée du procédé de fabrication est réduite ;
- la fiabilité et le respect des tolérances géométriques est également améliorée car la pièce n'est ni déposée, ni reprise.

Sur une telle machine d'usinage, le bridage du cadre est effectué de manière automatique, avec des brides hydrauliques pilotées par la machine d'usinage selon un paramétrage préétabli. La rapidité, la fiabilité et la répétabilité du bridage sont donc garantis.

Toujours dans un but de rapidité, de fiabilité et de répétabilité du procédé, une étape de débourrage est effectuée automatiquement sur une machine de débourrage, telle que du type mettant en œuvre des marteaux pneumatiques de débourrage.

Dans ce même but, les étapes de chargement et de déchargement du cadre moulé sur des postes de fabrication du procédé sont réalisées automatiquement, au moyen de systèmes robotisés. Cela concerne des postes de décochage ou démoulage, de débourrage, et de parachèvement.

L'invention concerne également un cadre pour vélo, présentant :
- un tube de direction ;
- un tube de selle ;
- un tube oblique ;
- une base, et de préférence deux bases ;
- un boitier de pédalier, de préférence du type pour un moteur pédalier ; et
- un support de batterie, de préférence au sein du tube oblique ;
remarquable en ce qu'il est monobloc et directement obtenu par fonderie, et en ce que les tubes du cadre définissent des cavités reliées entre elles.

La fonderie est compatible avec les géométries complexes d'un cadre de vélo, et le fait que le cadre soit monobloc permet de s'affranchir d'étapes d'assemblage venant renchérir le coût de fabrication du cadre.

De cette manière, il est possible de fabriquer le cadre en n'utilisant qu'un seul noyau, de forme simple. De plus, la communication des différents tubes du cadre facilite le passage des câbles et des réseaux du vélo lors de son assemblage, tels que des câbles de frein ou les réseaux électriques reliant le moteur à une console de pilotage de l'assistance du moteur, ou encore les réseaux reliant une batterie au moteur du vélo.

Dans un but de réduction du coût de fabrication du cadre, des bordures, définies entre une surface brute et une surface usinée par fraisage, présentent un rayon. Ce rayon empêche la formation de bavures créées par l'outil coupant lors du fraisage. De telles bavures apparaissent plus facilement au niveau d'une interface entre une surface usinée et une surface brute qui seraient orthogonales. La formation de bavure étant évitée, il n'y a pas besoin d'ébavurer la pièce, opération souvent manuelle. De préférence, le rayon de la bordure est compris entre 2 mm et 8 mm de préférence entre 3 mm et 5 mm.

Afin de faciliter le débourrage lors de la fabrication du cadre, le boîtier de pédalier se présente sous la forme d'une chambre de réception mettant en communication le tube de selle et le tube oblique, et configurée pour recevoir un moteur pédalier.

Pour que le cadre présente les caractéristiques mécaniques attendues, au moins un tube présente des nervures de rigidification sur une paroi interne du tube.

Afin d'éviter une étape d'assemblage, le tube de selle présente une bague déformable, faisant partie intégrante du tube, obtenue lors du moulage du cadre, et destinée à serrer et fixer une tige de selle du vélo.

Avantageusement, le tube de selle présente des portées configurées pour recevoir une tige de selle, obtenues lors du moulage du cadre, de sorte que le tube de selle n'est pas nécessairement cylindrique. De préférence, ces portées sont reprises par usinage afin de compenser le balancement du noyau au sein de l'empreinte. Cette conception permet de se passer d'une broche pour obtenir la cavité du tube de selle, et de concevoir un tube de selle qui n'est pas cylindrique. Cela facilite les opérations de démoulage et de poteyage.

Pour faciliter l'usinage du cadre, il présente au moins une patte de bridage. La superficie de la patte est comprise entre 20mm² et 80mm² environ, et de préférence plusieurs pattes de bridage. Ces pattes sont configurées pour permettre un bridage hydraulique du cadre, sur une machine d'usinage. Le bridage hydraulique confère une grande répétabilité du bridage, et les pattes de bridage permettent le maintien du cadre sans qu'il n'y ait de déformation des tubes. Le respect des tolérances dimensionnelles et géométriques est donc facilité.

### Brève description des dessins

[Fig.1] est une vue en perspective, vue de dessus, d'un cadre de vélo selon l'invention.
[Fig.2] est une vue de côté d'un tel cadre.
[Fig.3] est une vue d'un tube de selle de ce cadre.
[Fig.4] est une vue en coupe de ce tube de selle.
[Fig.5] est une vue partielle en perspective, vue de dessous, du cadre.
[Fig.6] est une vue en coupe du cadre.
[Fig.7] est une autre vue partielle en perspective, vue de dessous, du cadre.
[Fig.8] est un schéma illustrant une bordure entre une face usinée et une face brute de fonderie du cadre.
[Fig.9] est une vue de côté d'un noyau monobloc permettant la fabrication du cadre.

### Description détaillée de l'invention

L'invention concerne un cadre (1) de vélo et son procédé de fabrication, perfectionnés dans un objectif de réduction de coût.

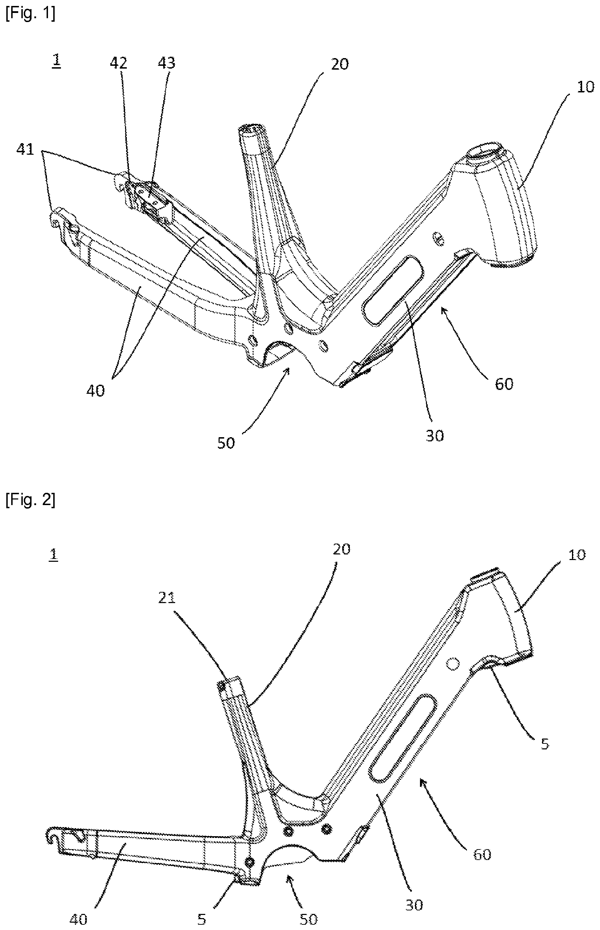

En référence aux figures 1 et 2, le cadre (1) de vélo comprend :
- un tube de direction (10) configuré pour recevoir une douille de direction ;
- un tube de selle (20) configuré pour recevoir une tige de selle ;
- un tube oblique (30) reliant le tube de direction (10) au tube de selle (20), de préférence au niveau d'un boitier de pédalier (50) qui est configuré pour recevoir un pédalier ;
- une base (40) s'étendant depuis le boîtier de pédalier (50) vers l'arrière du cadre (1), et terminée par une patte de liaison (41) configurée pour recevoir un moyeu d'une roue arrière du vélo. De préférence il y a deux bases (40).

Avantageusement le cadre (1) présente également un logement pour capteur de vitesse (42), et un logement pour étrier de freins (43). Ainsi, le montage du capteur de vitesse et le de l'étrier de frein sur le vélo est facilité.

Le cadre (1) étant conçu pour un vélo motorisé il comprend un support de batterie (60), de préférence au sein du tube oblique (30), et le boîtier de pédalier (50) est de préférence configuré pour recevoir un moteur pédalier, qui est plus performant qu'un moteur roue.

Pour réduire le coût de fabrication du cadre (1), celui-ci est obtenu par fonderie d'aluminium, sans nécessiter d'opérations manuelles d'assemblage. L'étape de fonderie met en œuvre deux empreintes en vis-à-vis et enserrant un noyau monobloc (6), ce qui permet de réduire le coût de la fonderie. Ainsi, le cadre (1) est monobloc : ni les pattes de liaison (41) ni la bague de serrage (21) du tube de selle (20) ne sont des éléments rapportés sur le cadre (1).

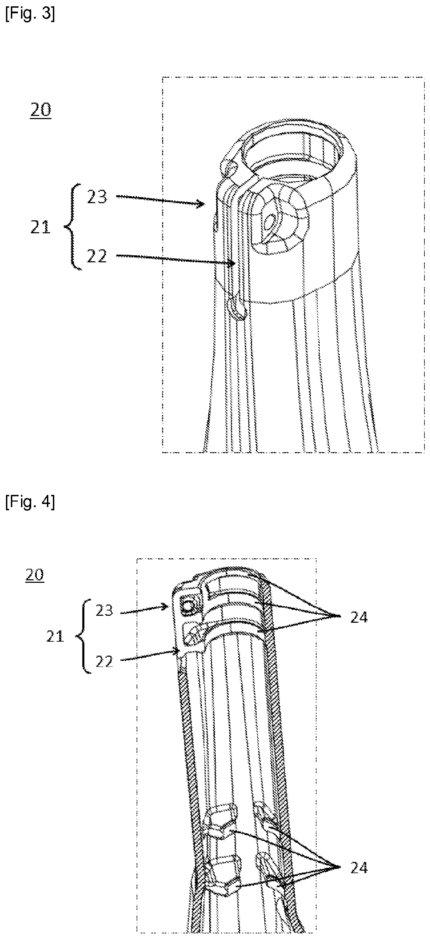

En référence aux figures 3 et 4, le tube de selle (20) présente plusieurs caractéristiques permettant de réduire le coût de fabrication du cadre (1).

Premièrement, la bague de serrage (21) de la tige de selle fait partie intégrante du cadre (1), de sorte qu'il n'est pas nécessaire de procéder à un assemblage d'une pièce rapportée. L'élasticité de la bague de serrage (21) est obtenue par une fente (22) à l'extrémité du tube de selle (20), et un perçage (23), ou de préférence un perçage et un taraudage sont prévus pour recevoir des moyens de serrage de la tige de selle (non représentée).

Le tube de selle (20) présente des portées (24) configurées pour guider et positionner la tige de selle. Les portées (24) mesurent entre 3mm et 15mm de haut. Cette conception permet :
- de limiter la superficie à usiner en vue guider la tige de selle, par rapport à un alésage d'un cylindre complet ;
- de ne pas utiliser de broche rétractable au sein du moule lors de la fabrication du cadre (1), ce qui renchérirait le coût de fabrication ;
- de pouvoir rattraper par usinage le balancement du noyau (6) au sein de l'empreinte.

En particulier, le tube de selle (20) ne présente pas une section cylindrique, de manière à faciliter le poteyage des empreintes ainsi que le démoulage du cadre (1). En effet, une section cylindrique présente des portions sans dépouille au niveau du diamètre du cylindre, qui gênent la tenue du poteyage ainsi que le bon démoulage.

Ainsi, le tube de selle (20) est conçu pour recevoir directement la tige de selle, sans pièce intermédiaire.

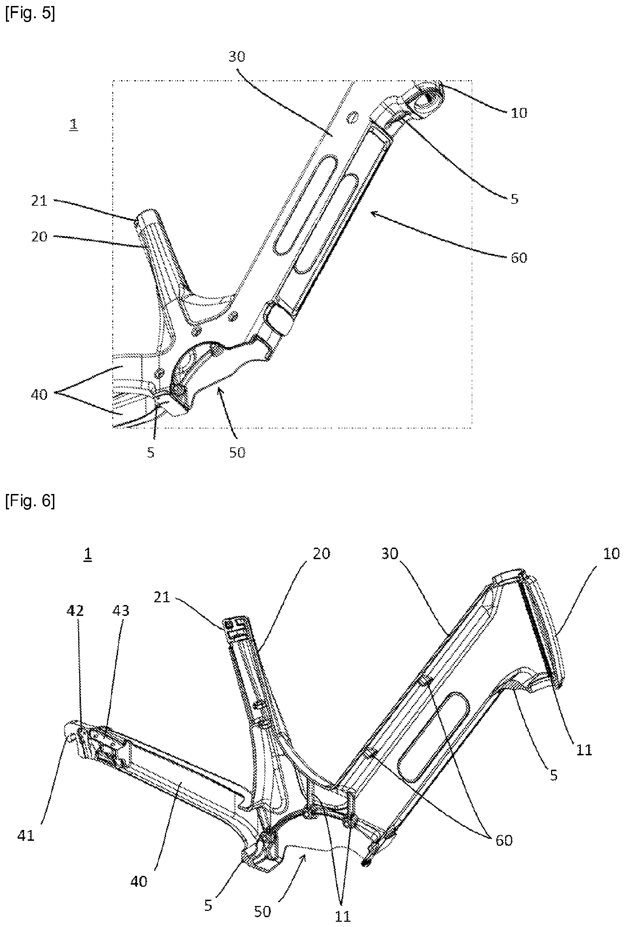

En référence aux figures 5 à 7, le cadre (1) présente au moins une patte de bridage (5), conçue pour permettre le bridage hydraulique du cadre (1) lors d'une étape d'usinage. Les pattes de bridage (5) présentent une superficie comprise entre 20mm² et 80mm² environ (les diamètres des brides sont généralement compris entre 5 et 10mm). Elles sont conçues pour résister à des efforts de serrage suffisants, typiquement de l'ordre de 400 kg à 700kg.

Les pattes de bridage (5) sont disposées sur le cadre (1) de manière que les efforts de serrage ne déforment pas les tubes (10, 20, 30) ni les bases (40). Pour cela, les pattes de bridage (5) sont disposées au niveau du plan de joint du cadre (1), c'est-à-dire le plan sagittal médian du cadre (1).

Un bridage hydraulique permet de maintenir en position la cadre (1) de manière sûre et répétable, l'effort de bridage (5) étant prédéterminé.

De préférence, des nervures (11) sont présentes à l'intérieur d'un ou des tubes (10, 20, 30), de manière à augmenter la résistance mécanique du tube sans dégrader l'esthétique du cadre (1). La résistance mécanique améliorer permet d'avoir un cadre (1) compatible avec un vélo motorisé.

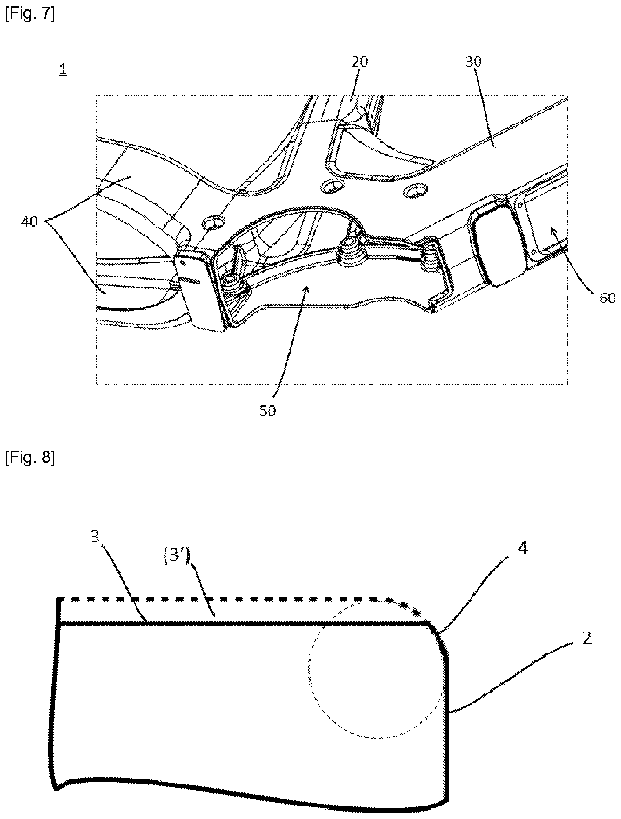

En référence à la figure 8, une bordure (4) définit la jonction entre une face brute de fonderie (2) et une face usinée par fraisage (3). La zone en pointillé (3') représente la matière usinée. Une bordure (4) présente de préférence un rayon, compris entre 3 et 5 mm, de sorte que le fraisage ne génère pas de bavure. Les étapes d'ébavurage sont donc réduites, voire supprimées. L'ébavurage étant le plus souvent réalisé manuellement, cette conception permet également de faire des économies.

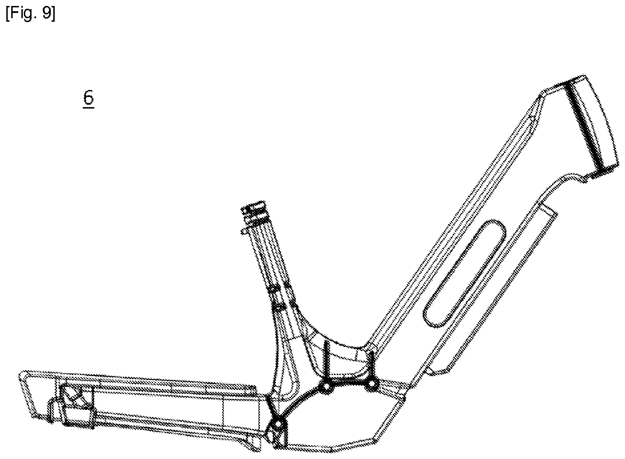

La figure 9 illustre un noyau (6) utilisé lors de l'étape de moulage du cadre (1). La conception du cadre (1) dans lequel tous les tubes (10, 20, 30) communiquent entre eux permet d'obtenir un noyau (6) monobloc, et de géométrie simple, puisque toutes les parties du noyau (6) se réunissent au niveau du boitier de pédalier (50).

Le procédé selon l'invention est donc remarquable en ce qu'il permet de fabriquer un cadre (1) de vélo selon les caractéristiques précitées, en ne mettant en œuvre qu'un seul noyau (6), au sein d'un moule constitué de deux empreintes, dépourvu de tiroir ou de broche escamotable : le moule est plus simple à fabriquer et à mettre en œuvre, donc peu couteux.

Le noyau (6) n'étant pas constitué de plusieurs sous-parties assemblées entre elles, il ne présente pas d'assemblage risquant de se détériorer lors de la coulée.

Ensuite, les assemblages de noyaux (6) en plusieurs parties fournissent généralement des tolérances dimensionnelles élevées, qui ne sont pas compatibles avec le domaine considéré.

Au surplus, l'assemblage d'un noyau (6) en plusieurs parties étant fait manuellement, concevoir un cadre (1) de vélo dans le but que le noyau (6) nécessaire soit monobloc représente encore une économie de main d'œuvre.

Dans un but de productivité, les étapes du procédé de fabrication sont automatisées, lorsque cela est possible.

Premièrement, les étapes de manutention se font à l'aide de bras robotisés, à l'issue du moulage, ou pour charger le cadre (1) sur les autres postes de travail (par exemple débourrage, parachèvement, usinage, stockage).

Le débourrage du noyau (6) se fait sur une machine automatisée, telle qu'une machine comprenant des marteaux pneumatiques de débourrage faisant vibrer le cadre (1) en vue de détruire le noyau (6), et comprenant des moyens de manutention faisant tourner la pièce afin de vider le sable du noyau (6) par des orifices du cadre (1).

Dans le cas particulier d'un cadre (1) prévu pour recevoir un moteur pédalier, alors le boitier de pédalier (50) présente une chambre configurée pour recevoir le moteur. Cette chambre met en communication le tube oblique (30) et le tube de selle (20), et présente une large ouverture du côté inférieur du cadre (1), ce qui facilite l'évacuation du sable lors du débourrage. L'ouverture mesure par exemple 50mm par 200mm.

Le parachèvement est également effectué sur une machine automatisée. Le parachèvement étant une opération dangereuse pour les opérateurs (manipulation à la main d'outils lourds tels que des disqueuses, risques de blessures, niveau sonore très élevé, génération de poussières) ce choix est à la fois économique et sécurisant.

L'usinage est effectué sur un poste d'usinage, de préférence un centre d'usinage à 5 axes. Le cadre (1) est conçu de sorte que toutes les surfaces nécessitant une reprise en usinage soient accessibles et réalisables avec un seul module de bridage.

Ce choix de machine d'usinage, combiné à l'utilisation de pattes de bridage (5) permettant un bridage hydraulique piloté automatiquement par le poste d'usinage, permet de monter le cadre (1) et d'usiner ses surfaces fonctionnelles en une dizaine de minutes seulement.

L'invention concerne également une installation de fabrication de cadre (1) de vélo selon les caractéristiques précitées, comprenant :
- un poste automatique de fonderie ;
- un poste automatique de débourrage ;
- un poste automatique de parachèvement ;
- un poste automatique d'usinage ;
- des moyens de manutention automatique de chargement, de déchargement, et de transfert entre ces postes.

L'installation est pilotée par un automate programmé pour coordonner les différents postes automatiques de fabrication ainsi que les moyens de manutention.

L'installation selon l'invention permet de fabriquer des cadres (1) en aluminium, pour vélos motorisés, à un prix très compétitif.

Seule l'opération de pose du noyau (6) dans le moule est effectuée manuellement. Ceci est justifié du fait de la fragilité d'un noyau (6) en sable, ce qui rend sa manipulation par robot peu sûre. Surtout, l'opérateur peut effectuer un contrôle visuel de la conformité de l'empreinte lors de la pose du noyau (6), afin d'éviter une coulée non conforme.

Par ailleurs, le cadre (1), le procédé et l'installation peuvent être conformés différemment des exemples donnés sans sortir du cadre (1) de l'invention, qui est défini par les revendications.

En variante non représentée, le cadre (1) peut comprendre des haubans ou un tube supérieur.

En outre, les caractéristiques techniques des différents modes de réalisation et variantes mentionnés ci-dessus peuvent être, en totalité ou pour certaines d'entre elles, combinées entre elles. Ainsi, le cadre (1), le procédé et l'installation peuvent être adaptés en termes de coût, de fonctionnalités et de performance.

## Revendications

1. Procédé de fabrication d'un cadre (1) de vélo, présentant :
- un tube de direction (10) ;
- un tube de selle (20) ;
- un tube oblique (30) ;
- une base (40), et de préférence deux bases ;
- un boitier de pédalier (50), de préférence du type pour un moteur pédalier ; et
- un support de batterie (60), de préférence au sein du tube oblique ;
le procédé étant ***remarquable en* ce *qu***'il comprend une unique étape de moulage mettant en œuvre deux empreintes en vis-à-vis et enserrant un unique noyau monobloc (6), de manière à former un cadre monobloc dans lequel les tubes (10, 20, 30) définissent des cavités reliées entre elles.

2. Procédé selon la revendication 1, ***caractérisé en* ce *qu***'il comprend des opérations d'usinage de surfaces fonctionnelles du cadre (1) moulé, réalisées au sein d'une unique machine d'usinage.

3. Procédé selon l'une des revendications précédentes, ***caractérisé en* ce *qu***'une étape de débourrage est effectuée automatiquement sur une machine de débourrage.

4. Procédé selon l'une des revendications précédentes, ***caractérisé en* ce *que*** les étapes de chargement et de déchargement du cadre (1) moulé sur des postes de fabrication du procédé sont réalisées automatiquement, au moyen de systèmes robotisés.

5. Cadre (1) pour vélo, présentant :
- un tube de direction (10) ;
- un tube de selle (20) ;
- un tube oblique (30) ;
- une base (40), et de préférence deux bases (40) ;
- un boitier de pédalier (50), de préférence du type pour un moteur pédalier ; et
- un support de batterie (60), de préférence au sein du tube oblique ;
***caractérisé en* ce *qu***'il est monobloc et directement obtenu par fonderie, ***et en ce que*** les tubes (10, 20, 30) définissent des cavités reliées entre elles.

6. Cadre (1) selon la revendication 5, ***caractérisé en ce*** des bordures (4), définies entre une surface brute (2) et une surface usinée (3) par fraisage, présentent un rayon.

7. Cadre (1) selon l'une des revendications 5 ou 6, ***caractérisé en ce que*** le boîtier de pédalier (50) se présente sous la forme d'une chambre de réception mettant en communication le tube de selle (20) et le tube oblique (30), et configurée pour recevoir un moteur pédalier.

8. Cadre (1) selon l'une des revendications 5 à 7, ***caractérisé en ce qu*'**un des tubes (10, 20, 30) présente des nervures de rigidification (11) sur une paroi interne du tube (10, 20, 30).

9. Cadre (1) selon l'une des revendications 5 à 8, ***caractérisé en ce que*** le tube de selle (20) présente une bague déformable (21) faisant partie intégrante du tube.

10. Cadre (1) selon l'une des revendications 5 à 9, ***caractérisé en ce que*** le tube de selle (20) présente des portées (24) reprises par usinage, configurées pour recevoir une tige de selle.

11. Cadre (1) selon l'une des revendications 5 à 10 ***caractérisé en* ce *qu***'il présente une patte de bridage (5) de superficie comprise entre 20 et 80 mm², et de préférence au moins deux pattes de bridage (5).

## Patentansprüche

1. Verfahren zur Herstellung eines Fahrradrahmens (1), umfassend:
- ein Steuerrohr (10);
- ein Sitzrohr (20);
- ein Unterrohr (30);
- eine Kettenstrebe (40), und vorzugsweise zwei Kettenstreben;
- ein Tretlagergehäuse (50), vorzugsweise vom Typ für einen Tretlagermotor; und
- eine Batteriehalterung (60), vorzugsweise innerhalb des Unterrohrs;
wobei das Verfahren ***dadurch gekennzeichnet ist, dass*** es einen einzigen Formgebungsschritt umfasst, bei dem zwei einander gegenüberliegende Formhohlräume verwendet werden, die einen einzigen einstückigen Kern (6) einschließen, um einen einstückigen Rahmen zu bilden, in welchem die Rohre (10, 20, 30) miteinander verbundene Hohlräume definieren.

2. Verfahren nach Anspruch 1, ***dadurch gekennzeichnet, dass*** es Bearbeitungsvorgänge von Funktionsflächen des gegossenen Rahmens (1) umfasst, die innerhalb einer einzigen Bearbeitungsmaschine durchgeführt werden.

3. Verfahren nach einem der vorhergehenden Ansprüche, ***dadurch gekennzeichnet, dass*** ein Entkernungsschritt automatisch auf einer Entkernungsmaschine durchgeführt wird.

4. Verfahren nach einem der vorhergehenden Ansprüche, ***dadurch gekennzeichnet, dass*** die Schritte des Be- und Entladens des gegossenen Rahmens (1) auf Fertigungsstationen des Verfahrens automatisch mittels Robotersystemen durchgeführt werden.

5. Fahrradrahmen (1), umfassend:
- ein Steuerrohr (10) ;
- ein Sitzrohr (20) ;
- ein Unterrohr (30) ;
- eine Kettenstrebe (40), und vorzugsweise zwei Kettenstreben (40);
- ein Tretlagergehäuse (50), vorzugsweise vom Typ für einen Tretlagermotor; und
- eine Batteriehalterung (60), vorzugsweise innerhalb des Unterrohrs ; ***dadurch gekennzeichnet, dass*** er einstückig ist und unmittelbar durch Gießen erhalten wird, und dass die Rohre (10, 20, 30) miteinander verbundene Hohlräume definieren.

6. Rahmen (1) nach Anspruch 5, ***dadurch gekennzeichnet, dass*** Kanten (4), die zwischen einer Rohoberfläche (2) und einer durch Fräsen bearbeiteten Oberfläche (3) definiert sind, einen Radius aufweisen.

7. Rahmen (1) nach einem der Ansprüche 5 oder 6, ***dadurch gekennzeichnet, dass*** das Tretlagergehäuse (50) in Form einer Aufnahmekammer ausgebildet ist, die das Sitzrohr (20) und das Unterrohr (30) miteinander verbindet und dazu ausgelegt ist, einen Tretlagermotor aufzunehmen.

8. Rahmen (1) nach einem der Ansprüche 5 bis 7, ***dadurch gekennzeichnet, dass*** eines der Rohre (10, 20, 30) Versteifungsrippen (11) an einer Innenwand des Rohrs (10, 20, 30) aufweist.

9. Rahmen (1) nach einem der Ansprüche 5 bis 8, ***dadurch gekennzeichnet, dass*** das Sitzrohr (20) einen verformbaren Ring (21) aufweist, der einen integralen Bestandteil des Rohrs bildet.

10. Rahmen (1) nach einem der Ansprüche 5 bis 9, ***dadurch gekennzeichnet, dass*** das Sitzrohr (20) spanend bearbeitete Anlageflächen (24) aufweist, die dazu ausgelegt sind, eine Sattelstütze aufzunehmen.

11. Rahmen (1) nach einem der Ansprüche 5 bis 10, ***dadurch gekennzeichnet, dass*** er eine Spannlasche (5) mit einer Fläche zwischen 20 und 80 mm² aufweist, und vorzugsweise mindestens zwei Spannlaschen (5).

## Claims

1. A method for manufacturing a bicycle frame (1), comprising :
- a head tube (10) ;
- a seat tube (20) ;
- a down tube (30) ;
- a chainstay (40), and preferably two chainstays;
- a bottom bracket shell (50), preferably of the type for a pedal motor; and
- a battery support (60), preferably within the down tube;
the method being ***characterized in that*** it comprises a single molding step implementing two opposing mold cavities enclosing a single one-piece core (6), so as to form a one-piece frame in which the tubes (10, 20, 30) define cavities connected to one another.

2. The method according to claim 1, ***characterized in that*** it comprises machining operations of functional surfaces of the molded frame (1), carried out within a single machining machine.

3. The method according to one of the preceding claims, ***characterized in that*** a core removal step is carried out automatically on a core removal machine.

4. The method according to one of the preceding claims, ***characterized in that*** the steps of loading and unloading the molded frame (1) onto manufacturing stations of the method are carried out automatically by means of robotic systems.

5. A bicycle frame (1), comprising:
- a head tube (10) ;
- a seat tube (20);
- a down tube (30) ;
- a chainstay (40), and preferably two chainstays (40) ;
- a bottom bracket shell (50), preferably of the type for a pedal motor; and
- a battery support (60), preferably within the down tube ; ***characterized in that it*** is one-piece and directly obtained by casting, and **in that** the tubes (10, 20, 30) define cavities connected to one another.

6. The frame (1) according to claim 5, ***characterized in that*** edges (4), defined between a raw surface (2) and a surface (3) machined by milling, have a radius.

7. The frame (1) according to one of claims 5 or 6, ***characterized in that*** the bottom bracket shell (50) is in the form of a receiving chamber placing the seat tube (20) and the down tube (30) in communication, and configured to receive a pedal motor.

8. The frame (1) according to one of claims 5 to 7, ***characterized in that*** one of the tubes (10, 20, 30) has stiffening ribs (11) on an inner wall of the tube (10, 20, 30).

9. The frame (1) according to one of claims 5 to 8, ***characterized in that*** the seat tube (20) has a deformable ring (21) forming an integral part of the tube.

10. The frame (1) according to one of claims 5 to 9, ***characterized in that*** the seat tube (20) has bearing surfaces (24) finish-machined and configured to receive a seat post.

11. The frame (1) according to one of claims 5 to 10, **characterized in that** it has a clamping lug (5) having a surface area of between 20 and 80 mm², and preferably at least two clamping lugs (5).
